(19) Europäisches Patentamt
European Patent Office
Office européen des brevets

(11) Publication number: **0 009 055**
**B1**

# (12) EUROPEAN PATENT SPECIFICATION

(45) Date of publication of patent specification: 05.05.82

(21) Application number: 78100967.5

(22) Date of filing: 22.09.78

(51) Int. Cl.$^3$: C 08 L 63/10, C 08 F 283/00 //(C08F283/00, 220/16, 212/02)

(54) **Compositions containing (a) a resin with vinyl groups and (b) a monomer mixture comprising (1) dicyclopentadiene alkenoate and (2) a vinyl aromatic monomer or dialhylphtalate.**

(43) Date of publication of application: 02.04.80 Bulletin 80/7

(45) Publication of the grant of the patent: 05.05.82 Bulletin 82/18

(84) Designated Contracting States: DE FR GB NL

(56) References cited:
DE - A - 2 608 839
FR - A - 1 552 979
US - A - 3 466 259

(73) Proprietor: THE DOW CHEMICAL COMPANY
2030 Abbott Road Post Office Box 1967
Midland, Michigan 48640 (US)

(72) Inventor: Nelson, Donald Louis
310 Narcissus
Lake Jackson Brazoria Texas (US)

(74) Representative: Weickmann, Heinrich, Dipl.-Ing. et al,
Postfach 860 820 Möhlstrasse 22
D-8000 München 86 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 009 055 B1

Courier Press, Leamington Spa, England.

Compositions containing (a) a resin with vinyl groups and (b) a monomer mixture comprising (1) dicyclopentadiene alkenoate and (2) a vinyl aromatic monomer or dialylphtalate

This invention is directed to a thermosetting resin composition comprising from 80 to 30 percent by weight of a terminally unsaturated resin prepared by reacting a polyepoxide resin with an ethylenically unsaturated monocarboxylic acid and from 20 to 70 percent by weight of an ethylenically unsaturated monomer characterized in that the ethylenically unsaturated monomer comprises from 5 to 90 percent by weight of a dicyclopentadiene alkenoate and from 95 to 10 percent by weight of a vinyl aromatic monomer of diallyl phthalate. The use of the dicyclopentadiene alkenoate surprisingly accelerates the rate at which hardness of the resin develops during room temperature cure. The thermosettable resin composition is useful to make laminates, molded articles and coatings.

Vinyl ester resins having terminal unsaturation which are prepared by reacting a polyepoxide resin with an ethylenically unsaturated monocarboxylic acid and which will be referred to in the following description as vinyl ester resins, are well known in the art. Thus, French Patent Specification 1 552 979 and US-Patent Specification 3 466 259 disclose such vinyl ester resins which have in their structural formula a group having the formula

$$-\overset{\overset{O}{\|}}{C}-O-CH_2-\overset{\overset{OH}{|}}{C}H-CH_2.$$

By reacting this group with a dicarboxylic acid anhydride there result resins thermosettable with up to 70 percent by weight of an ethylenically unsaturated monomer. Suitable ethylenically unsaturated monocarboxylic acids include, for example, acrylic acid, methacrylic acid, cinnamic acid, and dicarboxylic acid half esters of hydroxyalkyl acrylates.

Any of the known polyepoxides may be used which includes, for example, glycidyl polyethers of polyhydric phenols and polyhydric alcohols, and epoxy novolacs. Preferred polyepoxides are the bisphenol-based resins and epoxy novolac resins having epoxide equivalent weights from 150 to 1000.

Also included in the definition of vinyl ester resins used herein are resins in which the secondary hydroxyl group produced when the epoxy group reacts with the carboxylic acid group is post reacted with a dicarboxylic acid anhydride to form pendant half ester groups. Vinyl ester resins useful in this invention may also be modified by reactions with isocyanates, other anhydrides, and other reagents reactive with the secondary hydroxyl group.

Suitable ethylenically unsaturated monomers copolymerizable with the vinyl ester resin comprises vinyl aromatic monomers such as, for example, styrene, methyl, styrene, chlorostyrene, vinyl toluene, divinyl benzene and diallyl phthalate. Preferably, the vinyl ester resin with the ethylenically unsaturated monomer contains from 30 to 50 percent by weight of the monomer based on the combined weight of the vinyl ester resin and the ethylenically unsaturated monomer. A small amount of an inhibitor such as, for example, tertiary butyl catechol is added to this mixture. The amount added is generally in the range of from 50 to 300 parts per million based upon the amount of vinyl aromatic monomer.

The dicyclopentadiene alkenoate employed in this invention is preferably prepared in an acid catalyzed reaction of a commercial $C_{10}$ hydrocarbon stream containing at least 50 percent by weight dicyclopentadiene with a monocarboxylic alkenoic acid. The process is known from British Patent 1,114,585. Useful monocarboxylic alkenoic acids have 3 to 5 carbon atoms, such as, for example, acrylic acid, methacrylic acid, crotonic acid, isocrotonic acid, angelic acid, tiglic acid and mixtures thereof. Preferably the alkenoic acid is acrylic acid.

This invention is also directed to cured fiber-reinforced resins prepared from thermosetting resin compositions described hereinbefore. The fiber-reinforced resins are prepared by first adding free radical forming catalysts to the thermosetting resin composition and then adding the mixture to a suitable fibrous reinforcement such as, for example, asbestos fibers, carbon fibers, fibrous glass, or inorganic fibers. When fibrous glass is used, it can be employed in any form such as, for example, chopped strands, filaments, ribbons, yarns, or reinforcing mats. Examples of suitable catalysts include benzoyl peroxide, tertiary butyl peroxide, and methyl ethyl ketone peroxide. Accelerators are frequently used such as, for example, cobalt naphthenate and dimethyl aniline. The thermosetting resin composition containing catalyst and optionally an accelerator is rolled, sprayed or impregnated into the fibrous reinforcement and then cured in a manner well known in the art.

Examples 1 and 2 and Comparative Run A

A thermosetting resin composition was prepared in Examples 1 and 2 by blending a commercially available vinyl ester resin with dicyclopentadiene acrylate and styrene. In Comparative Run A, the vinyl ester resin was only blended with styrene.

The vinyl ester resin was prepared by combining the following proportions of reactants: A polyepoxide resin was prepared first by reacting three parts by weight of the diglycidyl ether of bisphenol A with one part by weight of bisphenol A, after which 1.45 parts of the diglycidyl ether of

bisphenol A was blended therewith. The polyepoxide mixture so produced was reacted with 1.15 parts by weight of methacrylic acid. When the acid content is reduced to less than 3 percent by weight, the polyepoxide/methacrylic acid product was reacted with 0.2 parts by weight of maleic anhydride.

The dicyclopentadiene acrylate (DCPD—A) was prepared by reacting one mole of acrylic acid with one mole of dicyclopentadiene in the presence of a $BF_3$ catalyst.

Glass laminates containing 25 percent by weight random fiber glass mats were prepared using the above resin compositions. Two fiber glass mats and a hand-roller technique were used to make a sheet 1/8 inch (3 mm) thick and 12 inches by 14 inches (30 cm by 36 cm) in dimensions for each blend. Catalysts were added to each resin blend so that the gel time was between 15 and 18 minutes.

The Barcol hardness development data illustrates that the hardness development is significantly more rapid for the laminates employing the resin compositions of Examples 1 and 2 than for Comparative Run A, and the end value is higher.

TABLE I

| Compositions | Example 1 | Example 2 | Comparative Run A |
|---|---|---|---|
| Weight percent vinyl ester resin | 55 | 55 | 55 |
| Weight percent styrene | 36 | 27 | 45 |
| Weight percent DCPD—A | 9 | 18 | 0 |
| ppm methyl hydroquinone | 100 | 100 | 100 |
| ppm p-tert.butyl catechol | 10 | 7 | 12 |
| Properties | | | |
| Minimum 22°C viscosity, cps | 890 | 1932 | 468 |
| Room temperature gel time, minutes | 17.7 | 21.0 | 17.7 |
| 180°F (82°C) SPI gel time | | | |
| Gel time, minutes | 6.4 | 8.3 | 7.4 |
| Cure time, minutes | 8.3 | 8.8 | 9.4 |
| Maximum exotherm °C | 201 | 191 | 203 |
| Glass Laminates, Catalyst System | | | |
| Weight percent methyl ethyl ketone peroxide | 1.0 | 1.2 | 1.0 |
| Weight percent cobalt naphthenate, 6 percent | 0.1 | 0.1 | 0.1 |
| Weight percent dimethyl-aniline | 0.1 | 0.1 | 0.1 |
| Room temperature gel time, minutes | 17.7 | 18.4 | 17.7 |

| Barcol Hardness Development | Example 1 | Example 2 | Comparative Run A |
|---|---|---|---|
| 45 minutes | 30 | 16 | — |
| 1 hour | 32 | 21 | 7 |
| 2 hours | 31 | 26 | 14 |
| 4 hours | 32 | 31 | 18 |
| 6 hours | 32 | 29 | 21 |
| 8 hours | 32 | 32 | 23 |
| 24 hours | 33 | 35 | 26 |
| 72 hours | 36 | 36 | 32 |
| Heat Distortion Temp., 0°C ASTM D—648—56 | 80 | 84.5 | 81 |

**Claims**

1. A thermosetting resin composition comprising from 80 to 30 percent by weight of a terminally unsaturated resin prepared by reacting a polyepoxide resin with an ethylenically unsaturated monocarboxylic acid and from 20 to 70 percent by weight of an ethylenically unsaturated monomer characterized in that the ethylenically unsaturated monomer comprises from 5 to 90 percent by weight of a dicyclopentadiene alkenoate and from 95 to 10 percent by weight of a vinyl aromatic monomer or diallyl phthalate.

2. The thermosetting resin composition as in claim 1 characterized in that the alkenoate group contains from 3 to 5 carbon atoms.

3. A fiber-reinforced resin prepared from a thermosetting resin composition by adding a free radical-forming catalyst to the thermosetting resin composition and then adding the mixture to a fibrous reinforcing material, characterized in that the thermosetting resin composition is the thermosetting resin composition of claim 1 or 2.

**Patentansprüche**

1. Wärmehärtende Harzzusammensetzung enthaltend 80 bis 30 Gew.-% eines terminal ungesättigten Harzes, welches durch Umsetzung eines Polyepoxidharzes mit einer ethylenisch ungesättigten Monocarbonsäure und 20 bis 70 Gew.-% eines ethylenisch ungesättigten Monomer hergestellt wurde, dadurch gekennzeichnet, daß das ethylenisch ungesättigte Monomer 5 bis 90 Gew.-% eines Dicyclopentadienalkenoats und 95 bis 10 Gew.-% eines vinylaromatischen Monomers oder von Diallylphthalat enthält.

2. Wärmehärtende Harzzusammensetzung gemäß Anspruch 1, dadurch gekennzeichnet, daß die Alkenoatgruppe 3 bis 5 Kohlenstoffatome enthält.

3. Faserverstärktes Harz, hergestellt aus einer wärmehärtenden Harzzusammensetzung durch Zugabe eines freie Radikale bildenden Katalysators zur wärmehärtenden Harzzusammensetzung und dann Zugeben der Mischung zu einem faserigen Verstärkungsmaterial, dadurch gekennzeichnet, daß die wärmehärtende Harzzusammensetzung die wärmehärtende Zusammensetzung von Anspruch 1 oder 2 ist.

**Revendications**

1. Composition de résine thermodurcissable comprenant de 80 à 30 pour cent en poids d'une résine terminalement insaturée préparée par réaction d'une résine polyépoxyde avec un acide monocarboxylique éthyléniquement insaturé et de 20 à 70 pour cent en poids d'un monomère éthyléniquement insaturé, caractérisée par le fait que le monomère éthyléniquement insaturé comprend de 5 à 90 pour cent en poids d'un dicyclopentadiènyle alkénoate et de 95 à 10 pour cent en poids d'un monomère vinylaromatique ou de diallylphtalate.

2. Composition de résine thermodurcissable selon la revendication 1, caractérisée par le fait que le groupe alkénoate contient de 3 à 5 atomes de carbone.

3. Résine renforcée avec des fibres, préparée à partir d'une composition de résine thermodurcissable, en ajoutant un catalyseur formant des radicaux libres à la composition de résine thermodurcissable, puis en ajoutant le mélange à une matière de renforcement fibreuse, caractérisée par le fait que la composition de résine thermodurcissable est la composition de résine thermodurcissable des revendications 1 ou 2.